# EUROPÄISCHE PATENTANMELDUNG

(11) **EP 3 888 829 A1**
(43) Veröffentlichungstag der Anmeldung: **06.10.2021**
(21) Anmeldenummer: 21165974.3
(22) Anmeldetag: 30.03.2021
(51) Int. Cl.: B23C 5/10

(54) **SPANENDES WERKZEUG**

(30) Priorität: 02.04.2020 DE 202020001325 U
(71) Anmelder: Fraisa SA, 4512 Bellach (CH)
(72) Erfinder: Maushart, Josef, 4500 Solothurn (CH); Kammermeier, Dirk, 4500 Solothurn (CH)
(74) Vertreter: Keller Schneider Patent- und Markenanwälte AG (Bern)

(57) **Zusammenfassung**

Die Erfindung betrifft ein spanendes Werkzeug, insbesondere Fräser (1), welches zur spanenden Bearbeitung eines Werkstücks in eine Drehrichtung um eine in einer ersten Ebene liegende Rotationsachse (4) drehbar ist, wobei das spanende Werkzeug einen Werkzeugkopf (3) zur spanenden Bearbeitung des Werkstücks umfasst. Dabei weist der Werkzeugkopf (3) zwei sich gegenüberliegend angeordnete Spannuten (5.1, 5.2) mit je einer oder mehr Seitenkanten (6.1, 6.2) auf. Weiter weist der Werkzeugkopf (3) zwei seitliche Schneidkanten (7.1, 7.2) auf, welche in der ersten Ebene angeordnet sind, wobei sich eine erste der beiden seitlichen Schneidkanten (7.1) auf einer ersten Seite der Rotationsachse (4) befindet und eine zweite der beiden seitlichen Schneidkanten (7.2) sich auf einer der ersten Seite gegenüberliegenden, zweiten Seite der Rotationsachse (4) befindet. Dabei ist bei beiden Spannuten (5.1, 5.2) jeweils durch einen Abschnitt einer der einen oder mehr Seitenkanten (6.1, 6.2) der jeweiligen Spannut (5.1, 5.2) eine der seitlichen Schneidkanten (7.1, 7.2) gebildet, wobei die Spannuten (5.1, 5.2) jeweils in die Drehrichtung gesehen vor der ersten Ebene an die erste Ebene anliegend angeordnet sind, sodass ein in Drehrichtung gesehen hinterer Abschnitt der Seitenkante (6.1, 6.2) der jeweiligen Spannut (5.1, 5.2) in der ersten Ebene liegt und die entsprechende seitliche Schneidkante (7.1, 7.2) bildet. Ausserdem weist der Werkzeugkopf (3) an beiden seitlichen Schneidkanten (7.1, 7.2) anschliessend, jeweils in Drehrichtung gesehen hinter der ersten Ebene liegend, eine Freiflächenfase (8.1, 8.2) an die jeweilige seitliche Schneidkante (7.1, 7.2) anliegend auf. Der Werkzeugkopf (3) weist weiter entlang einer in der ersten Ebene liegenden, senkrecht zur Rotationsachse (4) ausgerichteten, ersten geraden Linie gemessen einen ersten Durchmesser und entlang einer senkrecht zur ersten geraden Linie und senkrecht zur Rotationsachse (4) ausgerichteten, zweiten geraden Linie gemessen einen zweiten Durchmesser auf, wobei der erste Durchmesser höchstens 4 mm beträgt und grösser als der zweite Durchmesser ist.

## Beschreibung

### Technisches Gebiet

Die Erfindung betrifft ein spanendes Werkzeug, insbesondere ein Fräser.

### Stand der Technik

Spanende Werkzeuge, insbesondere Fräser, welche zum eingangs genannten technischen Gebiet gehören, sind bekannt. Beispielsweise beschreibt die JP 5892008 B2 der Mitsubishi Materials Corp. einen Schaft-Kugelkopffräser, welcher eine Werkzeugspitze aufweist, die zur spanenden Bearbeitung eines Werkstücks um eine Rotationsachse gedreht wird und die einen äusseren Umfang aufweist, welcher eine Ellipse um die Achslinie bildet. Auf gegenüberliegenden Seiten der Achslinie sind zwei Schneidkantenabschnitte angeordnet, wobei die Seitenschneiden der Schneidkantenabschnitte je an den Enden der Hauptachsen der Ellipse angeordnet sind. Da die Seitenschneiden auf den äussersten Umfang der Ellipse liegen, berühren sie das Werkstück zuerst, während der anschliessende Umfang der Ellipse die Freiflächen bildet, die das Werkstück nicht berühren. Die Hauptachse der Ellipse ist höchstens 2 mm lang und ein Verhältnis einer Nebenachse der Ellipse zur Hauptachse ist 0.95 oder weniger. Für die Herstellung des Schaft-Kugelkopffräsers wird zuerst ein elliptischer Zylinder hergestellt, wonach die Kugelkopfspitze aus dem elliptischen Zylindermaterial hergestellt wird. Anschliessend werden die Schneidkanten angebracht. Als Zylindermaterial wird kubisches Bornitrid, gesinterter Diamant oder Hartmetall verwendet. Die Bearbeitung des Zylindermaterials erfolgt mittels Laser.

Derartige spanende Werkzeuge haben den Nachteil, dass ihre Herstellung teuer und aufwändig ist.

### Darstellung der Erfindung

Aufgabe der Erfindung ist es, ein dem eingangs genannten technischen Gebiet zugehörendes spanendes Werkzeug, insbesondere Fräser zu schaffen, welches mit geringem Kostenaufwand und wenig Arbeitsaufwand hergestellt werden kann.

Die Lösung der Aufgabe ist durch die Merkmale des Anspruchs 1 definiert. Gemäss der Erfindung ist das spanende Werkzeug, insbesondere Fräser, zur spanenden Bearbeitung eines Werkstücks in eine Drehrichtung um eine in einer ersten Ebene liegende Rotationsachse drehbar und umfasst einen Werkzeugkopf zur spanenden Bearbeitung des Werkstücks. Dieser Werkzeugkopf weist zwei sich gegenüberliegend angeordnete Spannuten mit je einer oder mehr Seitenkanten auf. Zudem weist der Werkzeugkopf zwei seitliche Schneidkanten auf, welche in der ersten Ebene angeordnet sind, wobei sich eine erste der beiden seitlichen Schneidkanten auf einer ersten Seite der Rotationsachse befindet und eine zweite der beiden seitlichen Schneidkanten auf einer der ersten Seite gegenüberliegenden, zweiten Seite der Rotationsachse befindet. Dabei ist bei beiden Spannuten jeweils durch einen Abschnitt einer der einen oder mehr Seitenkanten der jeweiligen Spannut eine der seitlichen Schneidkanten gebildet, wobei die Spannuten jeweils in die Drehrichtung gesehen vor der ersten Ebene an die erste Ebene anliegend angeordnet sind, sodass ein in Drehrichtung gesehen hinterer Abschnitt der Seitenkante der jeweiligen Spannut in der ersten Ebene liegt und die entsprechende seitliche Schneidkante bildet. Weiter weist der Werkzeugkopf an beiden seitlichen Schneidkanten anschliessend, jeweils in Drehrichtung gesehen hinter der ersten Ebene liegend, eine Freiflächenfase an die jeweilige seitliche Schneidkante anliegend auf. Zudem weist der Werkzeugkopf an jeder Position entlang der Rotationsachse, jeweils entlang einer in der ersten Ebene liegenden, an der jeweiligen Position die Rotationsachse senkrecht schneidenden ersten geraden Linie gemessen, einen ersten Durchmesser und entlang einer sowohl die Rotationsachse als auch die erste gerade Linie schneidenden, zweiten geraden Linie gemessen, einen zweiten Durchmesser auf, wobei an jeder Position entlang der Rotationsachse gemessen der erste Durchmesser grösser als der zweite Durchmesser ist und höchstens 16 mm, bevorzugt höchstens 12 mm, besonders bevorzugt höchstens 8mm, am bevorzugtesten höchstens 4 mm beträgt.

Die erfindungsgemässe Lösung hat den Vorteil, dass das spanende Werkzeug, insbesondere Fräser auf einfache Art und Weise in kurzer Zeit mittels Schleifvorgängen hergestellt werden kann. Daher kann das spanende Werkzeug, insbesondere Fräser, mit geringem Kostenaufwand und wenig Arbeitsaufwand hergestellt werden. Dieser Vorteil wird ausgeprägter, je kleiner der erste Durchmesser ist. So ist der Vorteil ausgeprägter, wenn der erste Durchmesser höchstens 4 mm beträgt, als wenn der erste Durchmesser höchstens 8 mm beträgt. Genauso ist der Vorteil ausgeprägter, wenn der erste Durchmesser höchstens 8 mm beträgt, als wenn der erste Durchmesser höchstens 12 mm beträgt. Auch ist der Vorteil ausgeprägter, wenn der erste Durchmesser höchstens 16 mm beträgt, als wenn der erste Durchmesser höchstens 12 mm beträgt.

Vorteilhafterweise beträgt der erste Durchmesser an wenigstens einer Position entlang der Rotationsachse entlang der ersten geraden Linie gemessen mindestens 0.15 mm, besonders bevorzugt mindestens 0.2 mm, ganz besonders bevorzugt mindestens 0.5 mm. Dies hat den Vorteil, dass das spanende Werkzeug, insbesondere Fräser, eine Festigkeit aufweist, welche die Herstellung des Werkzeugs mittels Schleifvorgängen erleichtert, weil nur eine geringe Gefahr eines Bruchs des Werkzeugs aufgrund von auf das Werkzeug wirkenden Kräften besteht.

Alternativ dazu besteht aber auch die Möglichkeit, dass der erste Durchmesser an allen Positionen entlang der Rotationsachse entlang der ersten geraden Linie gemessen weniger als 0.15 mm beträgt.

Vorteilhafterweise weisen die Freiflächenfasen an der jeweiligen anliegenden seitlichen Schneidkante einen Freiflächenwinkel von mindestens 6° auf. Dies hat den Vorteil, dass sich die Freiflächenfasen mit zunehmendem Abstand von der jeweiligen anliegenden seitlichen Schneidkante deutlich der Rotationsachse nähern. Entsprechend berühren die Freiflächenfasen bei der Bearbeitung des Werkstücks mit dem spanenden Werkzeug das Werkstück nicht, wodurch mit den seitlichen Schneidkanten sauberere Schnitte am Werkstück vorgenommen werden können. Entsprechend wird dadurch die Oberflächenqualität des bearbeiteten Werkstücks erhöht.

In einer bevorzugten Variante weisen die Freiflächenfasen an der jeweiligen anliegenden seitlichen Schneidkante einen Freiflächenwinkel von weniger als 10°, besonders bevorzugt weniger als 8° auf. Dies hat den Vorteil, dass die seitlichen Schneidkanten mit einem vergleichsweise grossen Keilwinkel hergestellt werden können, wodurch die Standzeit des spanenden Werkzeugs erhöht wird.

In einer Variante dazu weisen die Freiflächenfasen an der jeweiligen anliegenden seitlichen Schneidkante einen Freiflächenwinkel von 10° oder mehr auf.

Alternativ zu diesen Varianten besteht aber auch die Möglichkeit, dass die Freiflächenfasen an der jeweiligen anliegenden seitlichen Schneidkante einen Freiflächenwinkel von weniger als 6° aufweisen.

Bevorzugt weist der Werkzeugkopf eine in der ersten Ebene liegende, stirnseitige Schneidkante auf. Dies hat den Vorteil, dass auch mit dem spanenden Werkzeug auch stirnseitig eine Bearbeitung des Werkstücks ermöglicht wird.

Alternativ dazu besteht auch die Möglichkeit, dass der Werkzeugkopf keine in der ersten Ebene liegende, stirnseitige Schneidkante aufweist.

Wenn der Werkzeugkopf eine in der ersten Ebene liegende, stirnseitige Schneidkante aufweist, dann verläuft vorzugsweise jede der beiden Freiflächenfasen ausgehend von der jeweiligen seitlichen Schneidkante kontinuierlich über eine Stirnseite des Werkzeugkopfs auf eine der jeweiligen seitlichen Schneidkante gegenüberliegende Seite des Werkzeugkopfs bis zur dort angeordneten Spannut, wobei die stirnseitige Schneidkante zwischen den beiden Freiflächenfasen angeordnet ist. Dies hat den Vorteil, dass die stirnseitige Schneidkante auf einfache Art und Weise mit dem Aufbringen der Freiflächenfasen erzeugt werden kann. Somit kann das spanende Werkzeug rascher und kostengünstiger hergestellt werden.

Alternativ dazu besteht aber auch die Möglichkeit, dass der Werkzeugkopf eine stirnseitige Schneidkante aufweist, welche nicht zwischen den beiden Freiflächenfasen angeordnet ist. Auch besteht die Möglichkeit, dass der Werkzeugkopf eine stirnseitige Schneidkante aufweist, welche nicht in der ersten Ebene liegt.

Bevorzugt schneidet eine senkrecht zur Rotationsachse ausgerichtete, in einem Bereich der Spannuten angeordnete, zweite Ebene die Freiflächenfasen jeweils in einer geraden oder konkaven Linie. Dies hat den Vorteil, dass die Freiflächenfasen sehr schnell mit einem einzigen Schleifvorgang aufgebracht werden können. Dieser Vorteil ist besonders ausgeprägt, wenn die senkrecht zur Rotationsachse ausgerichtete, im Bereich der Spannuten angeordnete, zweite Ebene die Freiflächenfasen jeweils in einer konkaven Linie schneidet.

Alternativ dazu besteht aber auch die Möglichkeit, dass die senkrecht zur Rotationsachse ausgerichtete, in einem Bereich der Spannuten angeordnete, zweite Ebene die Freiflächenfasen jeweils in einer konvexen Linie schneidet.

Vorzugsweise weist ein senkrecht zur Rotationsachse verlaufender Querschnitt durch den Werkzeugkopf eine elliptische oder ovale Grundform auf, in welcher die Spannuten als Ausnehmungen eingelassen sind. Dies hat den Vorteil, dass das spanende Werkzeug einfach und kostengünstig hergestellt werden kann.

Alternativ dazu besteht aber auch die Möglichkeit, dass ein senkrecht zur Rotationsachse verlaufender Querschnitt durch den Kugelkopf eine andere Grundform aufweist.

Vorzugsweise ist das spanende Werkzeug ein Schaftfräser. Dies hat den Vorteil, dass das spanende Werkzeug rasch und kostengünstig aus einem Stück hergestellt werden kann. Alternativ dazu ist das spanende Werkzeug hingegen kein Schaftfräser.

In einer ersten bevorzugten Variante ist das spanende Werkzeug ein Kugelkopffräser. Dies hat den Vorteil, dass das Werkstück mit dem spanenden Werkzeug effizient und präzise dreidimensional bearbeitet werden kann.

In einer zweiten bevorzugten Variante ist das spanende Werkzeug ein Zylinderkopffräser. Dies hat den Vorteil, dass mit dem spanenden Werkzeug ebene, flächige Stellen des Werkstücks effizient und präzise bearbeitet werden können.

Alternativ zu diesen beiden Varianten besteht aber auch die Möglichkeit, dass das spanende Werkzeug weder ein Kugelkopffräser noch ein Zylinderkopffräser ist.

Vorteilhafterweise ist das spanende Werkzeug ein Vollfräser und weist einen Grundkörper auf. Dies hat den Vorteil, dass das spanende Werkzeug aufgrund seines ersten Durchmessers von höchstens 16 mm, höchstens 12 mm, höchstens 8 mm, bzw. höchstens 4 mm auf einfache Art und Weise als stabiles Werkzeug hergestellt werden kann.

Alternativ dazu besteht aber auch die Möglichkeit, dass das spanende Werkzeug ein Bohrer oder ein Fräser in der Form eines Trägerwerkzeugs mit Wendeschneidplatten ist.

Vorteilhafterweise besteht der Grundkörper des spanenden Werkzeugs aus Hartmetall. Dies hat den Vorteil, dass das spanende Werkzeug eine hohe Stabilität aufweist und kostengünstig hergestellt werden kann.

Bevorzugt ist das Hartmetall Wolframcarbid mit einem metallischen Binder, insbesondere Kobalt. Dies hat den Vorteil, dass das spanende Werkzeug eine hohe Stabilität aufweist und gut für eine längere Standzeit beschichtet werden kann.

In einer Variante dazu ist der metallische Binder nicht Kobalt. So kann der metallische Binder beispielsweise Nickel oder eine Kobalt-Nickel-Mischung sein. Weiter besteht auch die Möglichkeit, dass das Hartmetall ein anderes Hartmetall als Wolframcarbid ist. So kann das Hartmetall beispielsweise Tantalcarbid oder ein Cermet wie Titancarbid, Titannitrid, Niobcarbid oder Vanadiumcarbid, jeweils mit einem metallischen Binder, sein. Dabei kann der Binder beispielsweise Nickel, Kobalt, Molybdän oder eine Legierung aus zwei oder allen drei dieser drei Metalle sein. Zudem besteht die Möglichkeit, dass der Grundkörper nicht aus Hartmetall besteht. So kann der Grundkörper beispielsweise aus Bornitrid bestehen.

Bevorzugterweise ist der Grundkörper mit einer Hartstoffschicht beschichtet. Dies hat den Vorteil, dass das spanende Werkzeug eine hohe Standzeit aufweist.

In einer ersten bevorzugten Variante davon ist der Grundkörper mit einer Nitridschicht, insbesondere einer TiAlN-Schicht, beschichtet. Dies hat den Vorteil, dass das spanende Werkzeug eine hohe Standzeit aufweist und zugleich für die Herstellung des Werkzeugs der Grundkörper auf einfache Art und Weise in industriellem Massstab mittels physikalischer Dampfbeschichtung (PVD) mit der Nitridschicht, insbesondere TiAlN-Schicht, beschichtet werden kann.

In einer zweiten bevorzugten Variante davon ist der Grundkörper mit einer Diamantschicht beschichtet. Dies hat den Vorteil, dass das spanende Werkzeug eine hohe Standzeit aufweist und zugleich für die Herstellung des Werkzeugs der Grundkörper auf einfache Art und Weise in industriellem Massstab mittels chemischer Dampfbeschichtung (CVD) mit der Diamantschicht beschichtet werden kann. In einer Variation davon ist der Grundkörper mit einer anderen kohlenstoff-basierten Schicht beschichtet.

In einer dritten bevorzugten Variante davon ist der Grundkörper mit einer oxidbasierten Schicht beschichtet. Dies hat den Vorteil, dass das spanende Werkzeug eine hohe Standzeit aufweist und zugleich für die Herstellung des Werkzeugs der Grundkörper auf einfache Art und Weise hergestellt werden kann.

Alternativ zu diesen drei Varianten besteht aber auch die Möglichkeit, dass der Grundkörper mit einer anderen Schicht, insbesondere einer Hartstoffschicht, beschichtet ist oder dass der Grundkörper nicht beschichtet ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Seitenansicht eines erfindungsgemässen spanenden Werkzeugs, welches ein Kugelkopffräser ist,
- Fig. 2: eine schematische Schrägansicht eines Werkzeugkopfs des Kugelkopffräsers, wobei es sich um eine Aufsicht von schräg vorne auf das distale Ende des Werkzeugkopfs handelt, und
- Fig. 3: eine schematische Schrägansicht eines Werkzeugkopfs eines weiteren erfindungsgemässen spanenden Werkzeugs, welches ein Zylinderkopffräser ist.

Grundsätzlich sind in den Figuren gleiche Teile mit gleichen Bezugszeichen versehen.

### Wege zur Ausführung der Erfindung

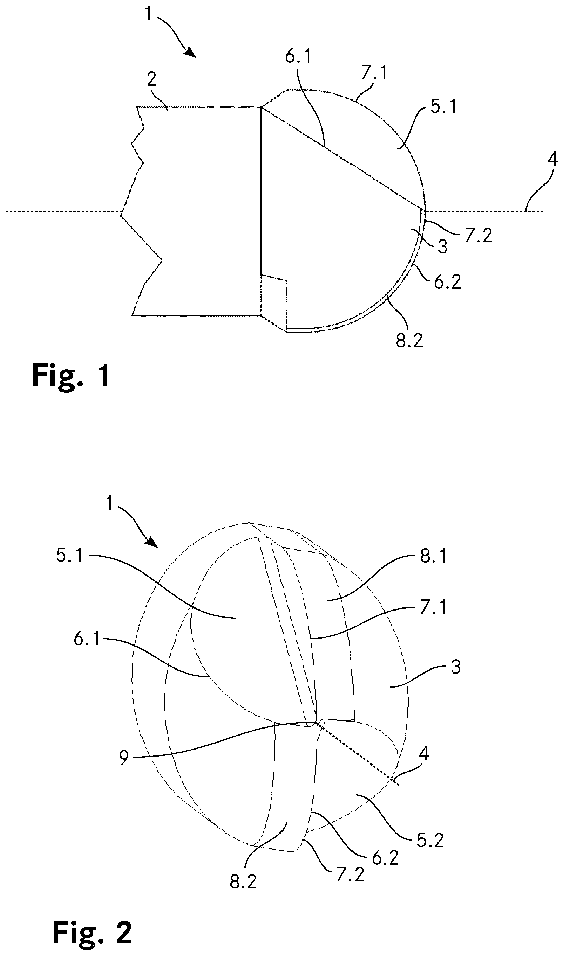

Figur 1 zeigt eine schematische Seitenansicht eines erfindungsgemässen spanenden Werkzeugs, welches ein Fräser 1 ist. Dieser Fräser 1 weist einen Schaft 2 sowie einen am Schaft 2 angebrachten Werkzeugkopf 3 zur spanenden Bearbeitung eines hier nicht gezeigten Werkstücks auf. Somit handelt es sich um einen Schaftfräser. Da Schaftfräser mit einem Schaft und einem am Schaft angebrachten Werkzeugkopf grundsätzlich bekannt sind, ist in der Figur 1 nur ein Teil des Schafts 2 gezeigt. Dafür ist der Werkzeugkopf 3 in der Figur 1 gross dargestellt. Dadurch ist gut erkennbar, dass ein distales Ende des Werkzeugkopfs 3 in der Seitenansicht eine Halbkreisform bildet. Dies kommt daher, dass der Fräser 1 ein Kugelkopffräser ist.

Für die Bearbeitung des Werkstücks ist der Fräser 1 in eine Drehrichtung um die Längsachse seines Schafts 2 drehbar. Somit bildet die Längsachse des Schafts 2 eine Rotationsachse 4, um welche der Fräser 1 zur spanenden Bearbeitung des Werkstücks in die Drehrichtung drehbar ist. Diese Rotationsachse 4 liegt in einer ersten Ebene. In der Figur 1 ist der Fräser 1 derart ausgerichtet dargestellt, dass die erste Ebene mit der Darstellungsebene der Darstellung übereinstimmt. Entsprechend ist die Rotationsachse 4 horizontal von links nach rechts ausgerichtet in der Darstellungsebene liegend gezeigt. Dabei befindet sich das distale Ende des Fräsers 1 rechts in der Darstellung, während sich der nur ansatzweise gezeigte Schaft 2 des Fräsers 1 in der Darstellung links befindet.

Figur 2 zeigt eine schematische Schrägansicht des Werkzeugkopfs 3 des Fräsers 1, wobei es sich um eine Aufsicht von schräg vorne auf das distale Ende des Werkzeugkopfs 3 handelt. Dabei verläuft die Rotationsachse 4 in der Figur 2 von hinten links oben nach vorne rechts unten. Die erste Ebene, in welcher die Rotationsachse 4 liegt, verläuft in der Figur 2 vertikal entlang der Rotationsachse 4.

In der Figur 2 ist erkennbar, dass der Werkzeugkopf 3 zwei sich gegenüberliegend angeordnete Spannuten 5.1, 5.2 mit je einer umlaufenden Seitenkante 6.1, 6.2, die je eine geschlossene Kurve bilden, aufweist. Weiter ist erkennbar, dass der Werkzeugkopf 3 zwei seitliche Schneidkanten 7.1, 7.2 aufweist. Diese seitlichen Schneidkanten 7.1, 7.2 sind in der ersten Ebene angeordnet. Eine erste der beiden seitlichen Schneidkanten 7.1 befindet sich auf einer ersten Seite der Rotationsachse 4 und eine zweite der beiden seitlichen Schneidkanten 7.2 befindet sich auf einer ersten Seite der gegenüberliegenden, zweiten Seite der Rotationsachse 4. Daher befindet sich die erste seitliche Schneidkante 7.1 in der Darstellung der Figur 2, wo die erste Ebene vertikal entlang der Rotationsachse 4 verläuft, oberhalb der Rotationsachse 4, während sich die zweite seitliche Schneidkante 7.2 unterhalb der Rotationsachse 4 befindet.

Die beiden seitlichen Schneidkanten 7.1, 7.2 sind jeweils durch einen Abschnitt der Seitenkante 6.1, 6.2 einer der Spannuten 5.1, 5.2 gebildet. Genauer genommen sind die Spannuten 5.1, 5.2 jeweils in die Drehrichtung gesehen vor der ersten Ebene an die erste Ebene anliegend angeordnet, sodass ein in Drehrichtung gesehen hinterer Abschnitt der Seitenkante 6.1, 6.2 der jeweiligen Spannut 5.1, 5.2 in der ersten Ebene liegt und die entsprechende seitliche Schneidkante 7.1, 7.2 bildet. Dabei weist der Werkzeugkopf 3 zusätzlich Freiflächenfasen 8.1, 8.2 auf, welche jeweils an der jeweiligen seitlichen Schneidkante 7.1, 7.2 in Drehrichtung gesehen hinter der ersten Ebene liegend an die jeweilige seitliche Schneidkante 7.1, 7.2 anschliessend angeordnet sind. Dabei schneidet eine senkrecht zur Rotationsachse 4 ausgerichtete, in einem Bereich der Spannuten 5.1, 5.2 angeordnete, zweite Ebene die Freiflächenfasen 8.1, 8.2 jeweils in einer konkaven Linie. Diese konkave Form ist in Figur 2 an den Konturen des Werkzeugkopfs 3 erkennbar. In einer hier nicht gezeigten Variante dazu schneidet die senkrecht zur Rotationsachse 4 ausgerichtete, in einem Bereich der Spannuten 5.1, 5.2 angeordnete, zweite Ebene die Freiflächenfasen 8.1, 8.2 hingegen jeweils in einer geraden Linie.

Die Freiflächenfasen 8.1, 8.2 weisen an der jeweiligen anliegenden seitlichen Schneidkante 7.1, 7.2 einen Freiflächenwinkel von 6° auf. Dieser Freiflächenwinkel ist an einer Position auf der jeweiligen seitlichen Schneidkante 7.1, 7.2 gemessen und ist der an dieser Position gemessene Winkel zwischen einer Normalen zur ersten Ebene und der an der jeweiligen Position an die seitliche Schneidkante 7.1, 7.2 anliegenden Freiflächenfase 8.1, 8.2.

In einer ersten Variante dazu weisen die Freiflächenfasen 8.1, 8.2 an der jeweiligen anliegenden seitlichen Schneidkante 7.1, 7.2 einen Freiflächenwinkel von 7° auf. In einer zweiten Variante dazu weisen die Freiflächenfasen 8.1, 8.2 an der jeweiligen anliegenden seitlichen Schneidkante 7.1, 7.2 einen Freiflächenwinkel von 8° auf. In einer dritten Variante dazu weisen die Freiflächenfasen 8.1, 8.2 an der jeweiligen anliegenden seitlichen Schneidkante 7.1, 7.2 einen Freiflächenwinkel von 9° auf. In einer vierten Variante dazu weisen die Freiflächenfasen 8.1, 8.2 an der jeweiligen anliegenden seitlichen Schneidkante 7.1, 7.2 einen Freiflächenwinkel von 10° auf. In einer fünften Variante dazu weisen die Freiflächenfasen 8.1, 8.2 an der jeweiligen anliegenden seitlichen Schneidkante 7.1, 7.2 einen Freiflächenwinkel von 5° auf. In weiteren Varianten dazu weisen die Freiflächenfasen 8.1, 8.2 an der jeweiligen anliegenden seitlichen Schneidkante 7.1, 7.2 einen anderen Freiflächenwinkel auf.

Wie in Figur 2 erkennbar ist, weist ein in einer senkrecht zur Rotationsachse 4 ausgerichteten Ebene liegender Querschnitt durch den Werkzeugkopf 3 eine elliptische Grundform auf. In diese elliptische Grundform sind die Spannuten 5.1, 5.2 als Ausnehmungen eingelassen. Eine längere, erste Hauptachse der elliptischen Grundform, welche senkrecht zur Rotationsachse 4 ausgerichtet ist, liegt dabei in der ersten Ebene und ist in der Darstellung der Figur 2 entsprechend vertikal ausgerichtet, während eine kürzere, zweite Hauptachse der elliptischen Grundform rechtwinklig zur ersten Hauptachse und rechtwinklig zur Rotationsachse 4 ausgerichtet ist und in der Darstellung entsprechend horizontal ausgerichtet ist.

Der Werkzeugkopf 3 weist daher an jeder Position entlang der Rotationsachse 4, jeweils entlang einer in der ersten Ebene liegenden, an der jeweiligen Position die Rotationsachse 4 senkrecht schneidenden, ersten geraden Linie gemessen, einen ersten Durchmesser und an der jeweiligen Position entlang einer sowohl die die Rotationsachse 4 als auch die erste gerade Linie senkrecht schneidenden, zweiten geraden Linie gemessen, einen zweiten Durchmesser auf. Dabei verläuft erste gerade Linie entlang der vorgehend erwähnten ersten Hauptachse, während zweite gerade Linie entlang der vorgehend erwähnten zweiten Hauptachse verläuft. Da, wie bereits erwähnt, der in der senkrecht zur Rotationsachse 4 ausgerichteten Ebene liegende Querschnitt durch den Werkzeugkopf 3 eine elliptische Grundform aufweist, ist an allen Positionen entlang der Rotationsachse gemessen der erste Durchmesser jeweils grösser als der zweite Durchmesser. An derjenigen Position entlang der Rotationsachse 4 gemessen, wo der Werkzeugkopf 3 den grössten Querschnitt aufweist, beträgt der erste Durchmesser 4 mm. An allen anderen Positionen entlang der Rotationsachse ist der erste Durchmesser kleiner. In Varianten dazu ist der erste Durchmesser jedoch kleiner als 4 mm. In einer ersten Variante ist an derjenigen Position entlang der Rotationsachse gemessen, wo der Werkzeugkopf den grössten Querschnitt aufweist, der erste Durchmesser 3.5 mm. In einer zweiten Variante ist an derjenigen Position entlang der Rotationsachse gemessen, wo der Werkzeugkopf den grössten Querschnitt aufweist, der erste Durchmesser 3 mm. In einer dritten Variante ist an derjenigen Position entlang der Rotationsachse gemessen, wo der Werkzeugkopf den grössten Querschnitt aufweist, der erste Durchmesser 2.5 mm. In einer vierten Variante ist an derjenigen Position entlang der Rotationsachse gemessen, wo der Werkzeugkopf den grössten Querschnitt aufweist, der erste Durchmesser 2 mm. In einer fünften Variante ist an derjenigen Position entlang der Rotationsachse gemessen, wo der Werkzeugkopf den grössten Querschnitt aufweist, der erste Durchmesser 1.5 mm. In einer sechsten Variante ist an derjenigen Position entlang der Rotationsachse gemessen, wo der Werkzeugkopf den grössten Querschnitt aufweist, der erste Durchmesser 1 mm. In einer siebten Variante ist an derjenigen Position entlang der Rotationsachse gemessen, wo der Werkzeugkopf den grössten Querschnitt aufweist, der erste Durchmesser 0.5 mm. In einer achten Variante ist an derjenigen Position entlang der Rotationsachse gemessen, wo der Werkzeugkopf den grössten Querschnitt aufweist, der erste Durchmesser 0.2 mm. In einer neunten Variante ist an derjenigen Position entlang der Rotationsachse gemessen, wo der Werkzeugkopf den grössten Querschnitt aufweist, der erste Durchmesser 0.15 mm. In einer zehnten Variante ist an derjenigen Position entlang der Rotationsachse gemessen, wo der Werkzeugkopf den grössten Querschnitt aufweist, der erste Durchmesser 0.1 mm. In weiteren Varianten sind aber auch andere Masse des ersten Durchmessers möglich, wobei der erste Durchmesser an derjenigen Position entlang der Rotationsachse gemessen, wo der Werkzeugkopf den grössten Querschnitt aufweist, jedoch höchstens 16 mm, höchstens 12 mm, höchstens 8 mm oder höchstens 4 mm ist. So ist in einer weiteren Variante an derjenigen Position entlang der Rotationsachse gemessen, wo der Werkzeugkopf den grössten Querschnitt aufweist, der erste Durchmesser 16 mm. In einer weiteren Variante ist an derjenigen Position entlang der Rotationsachse gemessen, wo der Werkzeugkopf den grössten Querschnitt aufweist, der erste Durchmesser 12 mm. In einer weiteren Variante ist an derjenigen Position entlang der Rotationsachse gemessen, wo der Werkzeugkopf den grössten Querschnitt aufweist, der erste Durchmesser 8 mm.

Als Variante zu diesen Varianten weist der senkrecht zur Rotationsachse 4 verlaufende Querschnitt durch den Werkzeugkopf 3 eine ovale Grundform auf, in welcher die Spannuten 5.1, 5.2 als Ausnehmungen eingelassen sind. In dieser Variante ist der erste Durchmesser des Werkzeugkopfs 3, welcher in der ersten Ebene senkrecht zur Rotationsachse 4 gemessen ist, ebenfalls grösser als der zweite, senkrecht zum ersten Durchmesser und senkrecht zur Rotationsachse 4 gemessene Durchmesser des Werkzeugkopfs 3. Zudem ist in dieser Variante der erste Durchmesser an derjenigen Position entlang der Rotationsachse 4 entlang der ersten geraden Linie gemessen, wo der Werkzeugkopf 3 den grössten Querschnitt aufweist, ebenfalls höchstens 16 mm.

Wie in der Figur 2 ersichtlich, weist der Werkzeugkopf 3 eine in der ersten Ebene liegende, stirnseitige Schneidkante 9 auf. Dabei verläuft jede der beiden Freiflächenfasen 8.1, 8.2 ausgehend von der jeweiligen seitlichen Schneidkante 7.1, 7.2 kontinuierlich über eine Stirnseite des Werkzeugkopfs 3 auf eine der jeweiligen seitlichen Schneidkante 7.1, 7.2 gegenüberliegende Seite des Werkzeugkopfs 3 bis zur dort angeordneten Spannut 5.2, 5.1, wobei die stirnseitige Schneidkante 9 zwischen den beiden Freiflächenfasen 8.1, 8.2 angeordnet ist. Die stirnseitige Schneidkante 9 schneidet somit die Rotationsachse 4.

Der in den Figuren 1 und 2 gezeigte Fräser 1 ist ein Vollfräser und weist einen Grundkörper aus Hartmetall auf. Im vorliegenden Beispiel ist das Hartmetall Wolframcarbid mit Kobalt als metallischer Binder. In Varianten dazu besteht aber auch die Möglichkeit, dass das Hartmetall einen anderen metallischen Binder aufweist oder auch ein anderes Hartmetall als Wolframcarbid ist. So kann der Grundkörper beispielsweise aus Tantalcarbid oder Cermet bestehen. Beispiele für Cermet sind Titancarbid, Titannitrid, Niobcarbid sowie Vanadiumcarbid, jeweils mit einem metallischen Binder wie beispielsweise Nickel, Kobalt, Molybdän oder eine Legierung aus zwei oder allen drei dieser drei Metalle. Beispielsweise kann der Grundkörper aber anstelle von aus Hartmetall auch aus Bornitrid bestehen.

Der Grundkörper des Fräsers 1 ist mit einer TiAlN-Schicht beschichtet. In einer Variante dazu ist der Grundkörper des Fräsers 1 jedoch nicht mit TiAlN, sondern mit einer anderen Nitridschicht beschichtet. In einer weiteren Variante dazu ist der Grundkörper mit einer Diamantschicht beschichtet. In einer weiteren Variante dazu ist der Grundkörper mit einer oxidbasierten Schicht beschichtet. In einer weiteren Variante ist der Grundkörper gar nicht beschichtet.

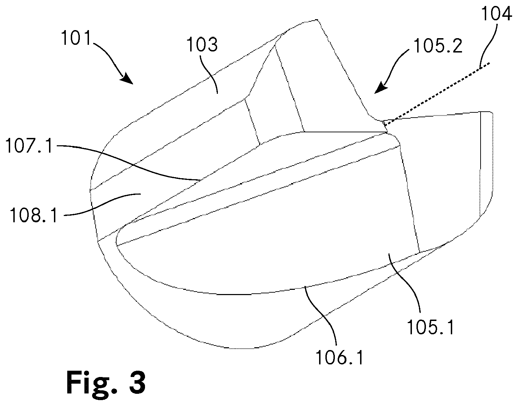

Figur 3 zeigt eine schematische Schrägansicht eines Werkzeugkopfs 103 eines weiteren erfindungsgemässen spanenden Werkzeugs, welches ebenfalls ein Fräser 101 ist. Dieser Fräser 101 ist ebenfalls ein Schaftfräser und weist einen Schaft auf, auf welchem der Werkzeugkopf 103 angebracht ist. Ähnlich wie bei Figur 2 handelt es sich bei der Figur 3 um eine Aufsicht von schräg vorne auf das distale Ende des Werkzeugkopfs 103.

Allerdings verläuft in der Figur 3 die entlang der Längsachse des Schafts verlaufende Rotationsachse 104 von hinten links unten nach vorne rechts oben. Ausserdem steht die erste Ebene, in welcher die Rotationsachse 104 liegt, in der Figur 3 aus der Darstellungsebene heraus.

Der in Figur 3 gezeigte Fräser 101 entspricht grösstenteils dem in den Figuren 1 und 2 gezeigten Fräser 1. Allerdings ist der in Figur 3 gezeigte Fräser 101 kein Kugelkopffräser, sondern ein Zylinderkopffräser. Sein Werkzeugkopf 103 weist aber ebenfalls zwei sich gegenüberliegend angeordnete Spannuten 105.1, 105.2 mit je einer Seitenkante 106.1 auf. Weiter weist der Werkzeugkopf 103 zwei seitliche Schneidkanten 107.1 auf. Diese seitlichen Schneidkanten 107.1 sind in der ersten Ebene angeordnet. Eine erste der beiden seitlichen Schneidkanten 107.1 befindet sich auf einer ersten Seite der Rotationsachse 104 und eine zweite der beiden seitlichen Schneidkanten befindet sich auf einer der ersten Seite gegenüberliegenden, zweiten Seite der Rotationsachse 104.

Die beiden seitlichen Schneidkanten 107.1 sind jeweils durch einen Abschnitt der Seitenkante 106.1 einer der Spannuten 105.1 gebildet. Genauer genommen sind die Spannuten 105.1, 105.2 jeweils in die Drehrichtung gesehen vor der ersten Ebene an die erste Ebene anliegend angeordnet, sodass ein in die Drehrichtung gesehen hinterer Abschnitt der Seitenkante 106.1 der jeweiligen Spannut 105.1, 105.2 in der ersten Ebene liegt und die entsprechende seitliche Schneidkante 107.1 bildet. Dabei weist der Werkzeugkopf 103 ebenfalls zusätzlich Freiflächenfasen 108.1 auf, welche jeweils an der jeweiligen seitlichen Schneidkante 107.1 in Drehrichtung gesehen hinter der ersten Ebene liegend an die jeweilige seitliche Schneidkante 107.1 anschliessend angeordnet sind. Dabei schneidet eine senkrecht zur Rotationsachse 104 ausgerichtete, in einem Bereich der Spannuten 105.1, 105.2 angeordnete, zweite Ebene die Freiflächenfasen 108.1 jeweils in einer geraden Linie. In einer hier nicht gezeigten Variante dazu schneidet die senkrecht zur Rotationsachse 104 ausgerichtete, in einem Bereich der Spannuten 105.1, 105.2 angeordnete, zweite Ebene die Freiflächenfasen 108.1 hingegen jeweils in einer konkaven Linie.

Die Freiflächenfasen 108.1 weisen an der jeweiligen anliegenden seitlichen Schneidkante 107.1 einen Freiflächenwinkel von 6° auf. Dieser Freiflächenwinkel ist an einer Position auf der jeweiligen seitlichen Schneidkante 107.1 gemessen und ist der an dieser Position gemessene Winkel zwischen einer Normalen zur ersten Ebene und der an der jeweiligen Position an die seitliche Schneidkante 107.1 anliegenden Freiflächenfase 108.1.

In einer ersten Variante dazu weisen die Freiflächenfasen 108.1 an der jeweiligen anliegenden seitlichen Schneidkante 107.1 einen Freiflächenwinkel von 7° auf. In einer zweiten Variante dazu weisen die Freiflächenfasen 108.1 an der jeweiligen anliegenden seitlichen Schneidkante 107.1 einen Freiflächenwinkel von 8° auf. In einer dritten Variante dazu weisen die Freiflächenfasen 108.1 an der jeweiligen anliegenden seitlichen Schneidkante 107.1 einen Freiflächenwinkel von 9° auf. In einer vierten Variante dazu weisen die Freiflächenfasen 108.1 an der jeweiligen anliegenden seitlichen Schneidkante 107.1 einen Freiflächenwinkel von 10° auf. In einer fünften Variante dazu weisen die Freiflächenfasen 108.1 an der jeweiligen anliegenden seitlichen Schneidkante 107.1 einen Freiflächenwinkel von 5° auf. In weiteren Varianten dazu weisen die Freiflächenfasen 108.1 an der jeweiligen anliegenden seitlichen Schneidkante 107.1 einen anderen Freiflächenwinkel auf.

Wie in Figur 3 erkennbar ist, weist ein in einer senkrecht zur Rotationsachse 104 ausgerichteten Ebene liegender Querschnitt durch den Werkzeugkopf 103 eine elliptische Grundform auf. In diese elliptische Grundform sind die Spannuten 105.1, 105.2 als Ausnehmungen eingelassen. Eine längere, erste Hauptachse der elliptischen Grundform, welche senkrecht zur Rotationsachse 104 ausgerichtet ist, liegt dabei in der ersten Ebene und ist in der Darstellung der Figur 3 entsprechend aus der Darstellungsebene herausstehend, während eine kürzere, zweite Hauptachse der elliptischen Grundform rechtwinklig zur ersten Hauptachse und rechtwinklig zur Rotationsachse 104 ausgerichtet ist und entsprechend in der Darstellungsebene liegt. Der Werkzeugkopf 103 weist daher an jeder Position entlang der Rotationsachse 104, jeweils entlang einer in der ersten Ebene liegenden, an der jeweilige Position die Rotationsachse 104 senkrecht schneidenden, ersten geraden Linie gemessen, einen ersten Durchmesser und an der jeweiligen Position entlang einer sowohl die die Rotationsachse 104 als auch die erste gerade Linie senkrecht schneidenden, zweiten geraden Linie gemessen, einen zweiten Durchmesser auf. Dabei verläuft die erste gerade Linie entlang der vorgehend erwähnten ersten Hauptachse, während die zweite gerade Linie entlang der vorgehend erwähnten zweiten Hauptachse verläuft. Da, wie bereits erwähnt, der in der senkrecht zur Rotationsachse 104 ausgerichteten Ebene liegende Querschnitt durch den Werkzeugkopf 103 eine elliptische Grundform aufweist, ist an allen Positionen entlang der Rotationsachse 104 gemessen der erste Durchmesser jeweils grösser als der zweite Durchmesser. Dabei beträgt der erste Durchmesser an allen Positionen entlang der Rotationsachse 104 gemessen 4 mm. In Varianten dazu ist der erste Durchmesser jedoch kleiner als 4 mm. In einer ersten Variante ist der erste Durchmesser an allen Positionen entlang der Rotationsachse 104 gemessen 3.5 mm. In einer zweiten Variante ist der erste Durchmesser an allen Positionen entlang der Rotationsachse 104 gemessen 3 mm. In einer dritten Variante ist der erste Durchmesser an allen Positionen entlang der Rotationsachse 104 gemessen 2.5 mm. In einer vierten Variante ist der erste Durchmesser an allen Positionen entlang der Rotationsachse 104 gemessen 2 mm. In einer fünften Variante ist der erste Durchmesser an allen Positionen entlang der Rotationsachse 104 gemessen 1.5 mm. In einer sechsten Variante ist der erste Durchmesser an allen Positionen entlang der Rotationsachse 104 gemessen 1 mm. In einer siebten Variante ist der erste Durchmesser an allen Positionen entlang der Rotationsachse 104 gemessen 0.5 mm. In einer achten Variante ist der erste Durchmesser an allen Positionen entlang der Rotationsachse 104 gemessen 0.2 mm. In einer neunten Variante ist der erste Durchmesser an allen Positionen entlang der Rotationsachse 104 gemessen 0.15 mm. In einer zehnten Variante ist der erste Durchmesser an allen Positionen entlang der Rotationsachse 104 gemessen 0.1 mm. In weiteren Varianten sind aber auch andere Masse des ersten Durchmessers möglich, wobei der erste Durchmesser jedoch an allen Positionen entlang der Rotationsachse 104 gemessen höchstens 16 mm, höchstens 12 mm, höchstens 8 mm oder höchstens 4 mm ist. So ist in einer weiteren Variante an allen Positionen entlang der Rotationsachse 104 gemessen der erste Durchmesser 16 mm. In einer weiteren Variante ist an allen Positionen entlang der Rotationsachse 104 gemessen der erste Durchmesser 12 mm. In einer weiteren Variante ist an allen Positionen entlang der Rotationsachse 104 gemessen der erste Durchmesser 8 mm.

Als Variante zu diesen Varianten weist der senkrecht zur Rotationsachse 104 verlaufende Querschnitt durch den Werkzeugkopf 103 eine ovale Grundform auf, in welcher die Spannuten 105.1, 105.2 als Ausnehmungen eingelassen sind. In dieser Variante ist der erste Durchmesser des Werkzeugkopfs 103, welcher in der ersten Ebene senkrecht zur Rotationsachse 104 gemessen ist, ebenfalls grösser als der zweite, senkrecht zum ersten Durchmesser und senkrecht zur Rotationsachse 104 gemessene Durchmesser des Werkzeugkopfs 103. Zudem ist in dieser Variante der erste Durchmesser an derjenigen Position entlang der Rotationsachse 104 gemessen, wo der Werkzeugkopf 103 den grössten Querschnitt aufweist, ebenfalls höchstens 16 mm, höchstens 12 mm, höchstens 8 mm oder höchstens 4 mm.

Der in Figuren 3 gezeigte Fräser 101 ist ein Vollfräser und weist einen Grundkörper aus Hartmetall auf. Im vorliegenden Beispiel ist das Hartmetall Wolframcarbid mit Kobalt als metallischer Binder. In Varianten dazu besteht aber auch die Möglichkeit, dass das Hartmetall einen anderen metallischen Binder aufweist oder auch ein anderes Hartmetall als Wolframcarbid ist. So kann das Hartmetall beispielsweise Tantalcarbid oder ein Cermet wie Titancarbid, Titannitrid, Niobcarbid oder Vanadiumcarbid, jeweils mit einem metallischen Binder, sein. Dabei kann der Binder beispielsweise Nickel, Kobalt, Molybdän oder eine Legierung aus zwei oder allen drei dieser drei Metalle sein. Zudem besteht die Möglichkeit, dass der Grundkörper nicht aus Hartmetall besteht. So kann der Grundkörper beispielsweise aus Bornitrid bestehen.

Der Grundkörper des Fräsers 101 ist mit einer TiAlN-Schicht beschichtet. In einer Variante dazu ist der Grundkörper des Fräsers 101 jedoch nicht mit TiAlN, sondern mit einer anderen Nitridschicht beschichtet. In einer weiteren Variante dazu ist der Grundkörper mit einer Diamantschicht beschichtet. In einer weiteren Variante ist der Grundkörper gar nicht beschichtet.

Im Gegensatz zum in den Figuren 1 und 2 gezeigten Fräser 1 weist der in der Figur 3 gezeigte Fräser keine stirnseitige Schneidkante auf.

Die Erfindung ist nicht auf die vorgehend beschriebenen Ausführungsformen beschränkt. Weitere Varianten und Variationen sind möglich und dem Fachmann aufgrund der vorliegenden Beschreibung unmittelbar zugänglich. So kann das spanende Werkzeug beispielsweise auch mehr als zwei Spannuten sowie gegebenenfalls mehr als zwei seitliche Schneidkanten aufweisen. Sobald zwei der Spannuten sich gegenüberliegen und zwei der seitlichen Schneidkanten jeweils durch einen Abschnitt einer der einen oder mehr Seitenkanten von einer dieser beiden sich gegenüberliegenden Spannuten gebildet ist, und das spanende Werkzeug die weiteren erfindungsgemässen Kriterien erfüllt, ist dieses spanende Werkzeug ein erfindungsgemässes spanendes Werkzeug.

Breiter formuliert kann auch ein spanendes Werkzeug, insbesondere Fräser, bereitgestellt werden, welches zur spanenden Bearbeitung eines Werkstücks in eine Drehrichtung um eine Rotationsachse drehbar ist. Ein solches spanendes Werkzeug umfasst einen Werkzeugkopf zur spanenden Bearbeitung des Werkstücks, wobei der Werkzeugkopf eine Anzahl *N* Spannuten mit je einer oder mehr Seitenkanten aufweist, wobei *N* eine ganze Zahl ist, welche gleich oder grösser als 2 ist. Dabei weist der Werkzeugkopf *N* seitliche Schneidkanten auf, wobei jede der *N* seitlichen Schneidkanten einer anderen von *N* Ebenen zugeordnet ist und in der jeweiligen ihr zugeordneten Ebene der *N* Ebenen liegt. Die Rotationsachse liegt dabei in allen der *N* Ebenen. Für jede Auswahl von zwei Ebenen aus den *N* Ebenen gilt somit, dass die jeweiligen zwei Ebenen zueinander angewinkelt sind und sich in einer gemeinsamen Schnittlinie schneiden, wobei die gemeinsame Schnittlinie zugleich die Rotationsachse ist, oder an einer gleichen Position und in einer gleichen Orientierung im Raum angeordnet sind. Jede der *N* Ebenen weist zudem einen Ebenenabschnitt auf, welcher sich jeweils ausgehend von der Rotationsachse zu der seitlichen Schneidkante, welche der jeweiligen Ebene zugeordneten ist, erstreckt. Die Ebenenabschnitte von jeweils zwei der *N* Ebenen, welchen zwei zueinander nächstliegend benachbarte seitlichen Schneidkanten zugeordnet sind, bzw. welchen zwei der *N* seitlichen Schneidkanten, zwischen welchen keine weitere der *N* seitlichen Schneidkanten angeordnet ist, zugeordnet sind, sind dabei vorzugsweise in einem Winkel von 360° geteilt durch *N* zueinander angewinkelt. Weiter ist bei jeder der *N* Spannuten jeweils durch ein Abschnitt einer der einen oder mehr Seitenkanten der jeweiligen Spannut eine der *N* seitlichen Schneidkanten gebildet, wobei die jeweilige Spannut jeweils in die Drehrichtung gesehen vor dem Ebenenabschnitt derjenigen Ebene, welcher die jeweilige seitliche Schneidkante zugeordnet ist, an diesen Ebenenabschnitt anliegend angeordnet ist, sodass ein in Drehrichtung gesehen hinterer Abschnitt der Seitenkante der jeweiligen Spannut im jeweiligen Ebenenabschnitt und damit in der jeweiligen Ebene liegt und die entsprechende seitliche Schneidkante bildet. Dabei weist der Werkzeugkopf an die *N* seitlichen Schneidkanten anschliessend, jeweils in Drehrichtung gesehen hinter dem Ebenenabschnitt derjenigen der *N* Ebenen liegend, welcher die jeweilige seitliche Schneidkante zugeordnet ist, eine Freiflächenfase an die jeweilige seitliche Schneidkante anliegend auf. Der Werkzeugkopf weist zudem für jede der *N* seitlichen Schneidkanten an jeder Position entlang der Rotationsachse, jeweils entlang einer die Rotationsachse an der jeweiligen Position senkrecht schneidenden und von der Rotationsachse zur jeweilige seitlichen Schneidkante führenden, ersten geraden Linie von der Rotationsachse zur jeweiligen seitlichen Schneidkante gemessenen, ersten Radius auf. Dabei beträgt für jede der *N* seitlichen Schneidkanten an jeder Position entlang der Rotationsachse gemessen der erste Radius höchstens 8 mm, höchstens 6 mm, höchstens 4 mm oder höchstens 2 mm und ist grösser als alle von der jeweiligen Position auf der Rotationsachse senkrecht zur Rotationsachse zu einem neben den *N* seitlichen Schneidkanten liegenden bzw. keine der *N* seitlichen Schneidkanten berührenden Punkt auf einer Aussenfläche des Werkzeugkopfs gemessenen Radien.

Zusammenfassend ist festzustellen, dass eins spanendes Werkzeug, insbesondere Fräser geschaffen wird, welches mit geringem Kostenaufwand und wenig Arbeitsaufwand hergestellt werden kann.

## Patentansprüche

1. Spanendes Werkzeug, insbesondere Fräser (1, 101), welches zur spanenden Bearbeitung eines Werkstücks in eine Drehrichtung um eine in einer ersten Ebene liegende Rotationsachse (4, 104) drehbar ist, wobei das spanende Werkzeug einen Werkzeugkopf (3, 103) zur spanenden Bearbeitung des Werkstücks umfasst, wobei
a) der Werkzeugkopf (3, 103) zwei sich gegenüberliegend angeordnete Spannuten (5.1, 5.2, 105.1, 105.2) mit je einer oder mehr Seitenkanten (6.1, 6.2, 106.1) aufweist, wobei
b) der Werkzeugkopf (3, 103) zwei seitliche Schneidkanten (7.1, 7.2, 107.1) aufweist, welche in der ersten Ebene angeordnet sind, wobei sich eine erste der beiden seitlichen Schneidkanten (7.1, 107.1) auf einer ersten Seite der Rotationsachse (4, 104) befindet und eine zweite der beiden seitlichen Schneidkanten (7.2) auf einer der ersten Seite gegenüberliegenden, zweiten Seite der Rotationsachse (4, 104) befindet, wobei bei beiden Spannuten (5.1, 5.2, 105.1, 105.2) jeweils durch einen Abschnitt einer der einen oder mehr Seitenkanten (6.1, 6.2, 106.1) der jeweiligen Spannut (5.1, 5.2, 105.1, 105.2) eine der seitlichen Schneidkanten (7.1, 7.2, 107.1) gebildet ist, wobei die Spannuten (5.1, 5.2, 105.1, 105.2) jeweils in die Drehrichtung gesehen vor der ersten Ebene an die erste Ebene anliegend angeordnet sind, sodass ein in Drehrichtung gesehen hinterer Abschnitt der Seitenkante (6.1, 6.2, 106.1) der jeweiligen Spannut (5.1, 5.2, 105.1, 105.2) in der ersten Ebene liegt und die entsprechende seitliche Schneidkante (7.1, 7.2, 107.1, 107.2) bildet, wobei
c) der Werkzeugkopf (3, 103) an beiden seitlichen Schneidkanten (7.1, 7.2, 107.1) anschliessend, jeweils in Drehrichtung gesehen hinter der ersten Ebene liegend, eine Freiflächenfase (8.1, 8.2, 108.1) an die jeweilige seitliche Schneidkante (7.1, 7.2, 107.1) anliegend aufweist,
d) wobei der Werkzeugkopf (3, 103) an jeder Position entlang der Rotationsachse (4, 104), jeweils entlang einer in der ersten Ebene liegenden, an der jeweilige Position die Rotationsachse (4, 104) senkrecht schneidenden, ersten geraden Linie gemessen, einen ersten Durchmesser aufweist und an der jeweiligen Position entlang einer sowohl die die Rotationsachse (4, 104) als auch die erste gerade Linie senkrecht schneidenden, zweiten geraden Linie gemessen, einen zweiten Durchmesser aufweist, wobei an jeder Position entlang der Rotationsachse (4, 104) gemessen der erste Durchmesser grösser als der zweite Durchmesser ist und höchstens 16 mm, bevorzugt höchstens 12 mm, besonders bevorzugt höchstens 8 mm, am bevorzugtesten höchstens 4 mm beträgt.

2. Spanendes Werkzeug nach Anspruch 1, **dadurch gekennzeichnet, dass** der erste Durchmesser an wenigstens einer Position entlang der Rotationsachse (4, 104) entlang der ersten geraden Linie gemessen mindestens 0.15 mm, bevorzugt mindestens 0.2 mm, besonders bevorzugt mindestens 0.5 mm beträgt.

3. Spanendes Werkzeug nach Anspruch 1 oder 2, **dadurch gekennzeichnet, dass** die Freiflächenfasen (8.1, 8.2, 108.1) an der jeweiligen anliegenden seitlichen Schneidkante (7.1, 7.2, 107.1) einen Freiflächenwinkel von mindestens 6° aufweisen.

4. Spanendes Werkzeug nach einem der Ansprüche 1 bis 3, **dadurch gekennzeichnet, dass** der Werkzeugkopf (3) eine in der ersten Ebene liegende, stirnseitige Schneidkante (9) aufweist.

5. Spanendes Werkzeug nach Anspruch 4, **dadurch gekennzeichnet, dass** jede der beiden Freiflächenfasen (8.1, 8.2) ausgehend von der jeweiligen seitlichen Schneidkante (7.1, 7.2) kontinuierlich über eine Stirnseite des Werkzeugkopfs (3) auf eine der jeweiligen seitlichen Schneidkante (7.1, 7.2) gegenüberliegende Seite des Werkzeugkopfs (3) bis zur dort angeordneten Spannut (5.2, 5.1) verläuft, wobei die stirnseitige Schneidkante (9) zwischen den beiden Freiflächenfasen (8.1, 8.2) angeordnet ist.

6. Spanendes Werkzeug nach einem der Ansprüche 1 bis 5, **dadurch gekennzeichnet, dass** eine senkrecht zur Rotationsachse (4, 104) ausgerichtete, in einem Bereich der Spannuten (5.1, 5.2, 105.2) angeordnete, zweite Ebene die Freiflächenfasen (8.1, 8.2, 108.1) jeweils in einer geraden oder konkaven Linie schneidet.

7. Spanendes Werkzeug nach einem der Ansprüche 1 bis 6, **dadurch gekennzeichnet, dass** ein senkrecht zur Rotationsachse (4, 104) verlaufender Querschnitt durch den Werkzeugkopf (3, 103) eine elliptische oder ovale Grundform aufweist, in welcher die Spannuten (5.1, 5.2, 105.1) als Ausnehmungen eingelassen sind.

8. Spanendes Werkzeug nach einem der Ansprüche 1 bis 7, **dadurch gekennzeichnet, dass** das spanende Werkzeug ein Kugelkopffräser (1) ist.

9. Spanendes Werkzeug nach einem der Ansprüche 1 bis 7, **dadurch gekennzeichnet, dass** das spanende Werkzeug ein Zylinderkopffräser (101) ist.

10. Spanendes Werkzeug nach einem der Ansprüche 1 bis 9, **dadurch gekennzeichnet, dass** das spanende Werkzeug ein Vollfräser (1, 101) ist und einen Grundkörper aufweist.

11. Spanendes Werkzeug nach Anspruch 10, **dadurch gekennzeichnet, dass** der Grundkörper des spanenden Werkzeugs aus Hartmetall besteht.

12. Spanendes Werkzeug nach Anspruch 11, **dadurch gekennzeichnet, dass** das Hartmetall Wolframcarbid mit einem metallischen Binder, insbesondere Kobalt, ist.

13. Spanendes Werkzeug nach einem der Ansprüche 10 bis 12, **dadurch gekennzeichnet, dass** der Grundkörper mit einer Hartstoffschicht beschichtet ist.

14. Spanendes Werkzeug nach einem der Ansprüche 10 bis 13, **dadurch gekennzeichnet, dass** der Grundkörper mit einer Nitridschicht, insbesondere einer TiAlN-Schicht, beschichtet ist.

15. Spanendes Werkzeug nach einem der Ansprüche 10 bis 14, **dadurch gekennzeichnet, dass** der Grundkörper mit einer Diamantschicht beschichtet ist.
